# EUROPÄISCHE PATENTANMELDUNG

(11) **EP 4 685 955 A1**
(43) Veröffentlichungstag der Anmeldung: **28.01.2026**
(21) Anmeldenummer: 24190671.8
(22) Anmeldetag: 24.07.2024
(51) Int. Cl.: H01M 50/24

(54) **AKKUPACK**

(71) Anmelder: Hilti Aktiengesellschaft, 9494 Schaan (LI)
(72) Erfinder: Seltmann, Daniel, 86842 Türkheim (DE); Klingen, David, 80798 München (DE); Beck, Martin, 86438 Kissing (DE); Zander, David, 86916 Kaufering (DE)
(74) Vertreter: Hilti Aktiengesellschaft Corporate Intellectual Property

(57) **Zusammenfassung**

Akkupack mit einem Akkuzellenträger und einer in axialer Richtung in den Akkuzellenträger eingeschobenen zylindrischen Akkuzelle, wobei die Akkuzelle einen zentralen Pluspol aufweist, der mittels eines Zellverbinders elektrisch kontaktiert ist, und wobei der Akkupack ein Dichtelement aufweist um die Akkuzelle gegen Feuchtigkeit zu schützen, wobei das Dichtelement den zentralen Pluspol ringförmig umgibt und vorzugsweise allseitig von diesem beabstandet ist.

## Beschreibung

Die vorliegende Erfindung betrifft ein Akkupack mit einem Akkuzellenträger und einer in axialer Richtung in den Akkuzellenträger eingeschobenen zylindrischen Akkuzelle, wobei die Akkuzelle einen zentralen Pluspol aufweist, der mittels eines Zellverbinders elektrisch kontaktiert ist. Der Akkupack weist ein Dichtelement auf, um die Akkuzelle gegen Feuchtigkeit zu schützen. Solche Akkupacks sind grundsätzlich aus dem Stand der Technik bekannt und kommen beispielsweise bei der Versorgung elektrischer Handwerkzeugmaschinen zum Einsatz.

DE 10 2018 210 663 A1 offenbart ein Akkupack für eine Handwerkzeugmaschine, mit einem Gehäuse, das ein Zellengehäuse aufweist, in welchem zumindest eine Akkuzelle über eine axiale Öffnung aufgenommen ist, wobei das Zellengehäuse zumindest eine radiale Öffnung aufweist, über die die zumindest eine Akkuzelle kontaktierbar ist. Im Bereich der radialen Öffnung ist ein Dichtelement angeordnet das die radiale Öffnung abdichtet.

WO 2022/073622 A1 beschreibt ein Akkupack-Gehäuse zum Aufnehmen mindestens eines Akkus, mit einem Innengehäuse, welches einen Aufnahmeraum für den mindestens einen Akku definiert, und einem Außengehäuse, welches das Innengehäuse mindestens teilweise umgibt. Am Innengehäuse ist eine Entgasungsöffnung ausgebildet, welche den Aufnahmeraum mit einer Umgebung des Akkupack-Gehäuses fluidwirksam verbindet, wobei die Entgasungsöffnung durch das Außengehäuse verschlossen ist und im Bereich der Entgasungsöffnung ein Sicherheitsüberdruckventil angeordnet ist.

DE 20 2016 006 515 U1 offenbart einen Akkublock aus einer Vielzahl von Akkuzellen und mit einem gemeinsamen Gehäuse für die Akkuzellen, das aus zumindest einem ersten Gehäuseteil und einem zweiten Gehäuseteil besteht. Am zweiten Gehäuseteil sind Dichtungselemente angeordnet, die in einen Spalt zwischen den Zellkörpern sowie in einen Spalt zwischen den Zellkörpern und dem Gehäuse eingreifen.

Es ist Aufgabe der vorliegenden Erfindung ein Akkupack bereitzustellen, das einfach herstellbar und sicher ist.

Die Aufgabe wird dadurch gelöst, dass das Dichtelement den zentralen Pluspol der Akkuzelle ringförmig umgibt und vorzugsweise allseitig von diesem beabstandet ist.

Das Dichtelement kann so ausgestaltet sein, dass es sich auf der Schulter des Pluspols abstützt bzw. dass das Dichtelement an der Schulter des Pluspols aufliegt.

Die Erfindung schließt die Erkenntnis ein, der zentrale Pluspol einer Akkuzelle durch eindringende Feuchtigkeit oder Wasser besonders gefährdet ist, da typischerweise der Potentialunterschied durch negativen Polanteil (Minuspol) und positiven Polanteil (Pluspol) sehr nah beieinander liegen. Durch Elektrolyteintrag kann es zur elektrochemischen Korrosion kommen, welche im Verlauf das Akkupack schädigt. Hierbei können neben Schädigungen der Akkuzelle auch Gefahren für den Anwender ausgehen. Diese Nachteile werden durch das erfindungsgemäß ausgestaltete Dichtelement vermieden. Insbesondere wurde diesbezüglich erkannt, dass besonders zwei Aspekte von kritischer Relevanz sind. Zum einen die uneingeschränkte Funktionsweise eines vorzugsweise umfassten Ausblasmechanismus mit Ausblasöffnung, der ein Ausgasen der Akkuzelle im Fehlerfall ermöglicht und zum anderen das Vorhalten einer ausreichend großen Oberfläche des Zentralen Pluspols, die zur Anbindung an den Zellverbinder zur Verfügung steht. Durch dass das erfindungsgemäße Dichtelement den zentralen Pluspol der Akkuzelle ringförmig umgibt und vorzugsweise allseitig von diesem beabstandet ist, wird eine optimale Zellkontaktierung, beispielsweise mittels Laserschweißverfahren, ermöglicht.

In einer besonders bevorzugten Ausgestaltung ist im Zellverbinder eine durch das Dichtelement abgedeckte Ausblasöffnung ausgebildet, wobei das Dichtelement und die Ausblasöffnung ein Überdruckventil definieren. Dadurch wird begünstigt, dass die Ausblasöffnung durch Druck des Gases und/oder durch Temperaturexposition des Dichtelements geöffnet werden. Alternativ oder zusätzlich kann das Dichtelement ein Material mit einer Schmelz- oder Zersetzungstemperatur aufweisen, die niedriger ist als die Temperatur des entweichenden Gases. In einer besonders bevorzugten Ausgestaltung ist die Schmelztemperatur bzw. der Punkt der thermischen Zersetzung des Dichtelements geringer als 150 Grad Celsius, weiter bevorzugt geringer als 125 Grad Celsius. Es hat sich als vorteilhaft herausgestellt, wenn das Dichtelement aus einem Elastomer, insbesondere einem thermoplastischen Elastomer, besteht. Das Material des Dichtelements ist dabei so gewählt, dass ausströmendes Gas aus einer Zelle das Material des Dichtelements wenigstens teilweise schmelzen kann. Durch das geschmolzene Dichtelement kann ein vom ausströmenden Gas erzeugter Überdruck abgebaut werden.

Das Dichtelement kann eine ringförmige Prägung aufweisen, die ein Auslenken des Dichtelements begünstigt.

In einer weiteren bevorzugten Ausgestaltung weist das Dichtelement eine in axialer Richtung abragende Krempe auf, welche die Ausblasöffnung verschließt oder umschließt. Die Krempe kann bei Überschreitung eines Mindestdrucks durch ein aus der Akkuzelle entweichendes Gas ausgelenkt werden, insbesondere in radialer Richtung. Es hat sich als vorteilhaft herausgestellt, wenn im Zellverbinder mehrere Ausblasöffnungen ausgebildet sind, wobei jede der Ausblasöffnungen durch das Dichtelement abgedeckt ist. In einer weiteren bevorzugten Ausgestaltung ist der Innendurchmesser des Dichtelements kleiner als der Außendurchmesser der Akkuzelle. Es hat sich als vorteilhaft herausgestellt, wenn das Dichtelement den zentralen Pluspol in axialer Richtung überragt.

In einer weiteren bevorzugten Ausgestaltung weist der Akkuzellenträger einen die Akkuzelle ringförmig umgebenden Trägersteg auf. Das Dichtelement kann in axialer Richtung auf dem Trägersteg abgestützt sein. In einer besonders bevorzugten Ausgestaltung weist die Akkuzelle einen Zellbecher auf, wobei das Dichtelement in axialer Richtung auf dem Zellbecher abgestützt ist. Es hat sich weiterhin als vorteilhaft herausgestellt, wenn das Dichtelement einen Übergang zwischen Trägersteg und Zellbecher abdeckt. In einer weiteren bevorzugten Ausgestaltung wird der Minuspol der Akkuzelle durch den Zellbecher der Akkuzelle bereitgestellt. Es hat sich als vorteilhaft herausgestellt, wenn der Abstandsraum zwischen dem Dichtelement und dem zentralen Pluspol frei von einer Vergussmasse ist. In einer weiteren bevorzugten Ausgestaltung ist der Zellverbinder metallisch und in einem Schweißbereich auf den zentralen Pluspol aufgeschweißt.

In einer besonders bevorzugten Ausgestaltung weist das Akkupack eine Mehrzahl von Akkuzellen und eine Mehrzahl von Dichtelementen auf, wobei die Mehrzahl von Dichtelementen durch das Bereitstellen einer Mehrzahl von Kreisöffnungen in einer Dichtmatte realisiert sind. Jede der Kreisöffnungen kann einen jeweiligen zentralen Pluspol einer Akkuzelle der Mehrzahl von Akkuzellen ringförmig, vorzugsweise allseitig beabstandet, umgeben. Es hat sich als vorteilhaft herausgestellt, wenn jede der Kreisöffnungen einen jeweiligen zentralen Pluspol einer Akkuzelle der Mehrzahl von Akkuzellen ringförmig, vorzugsweise allseitig beabstandet, umgibt. Bei einer, auch teilweisen, antiparallelen Anordnung der Akkuzellen im Akkuzellenträger muss nicht notwendigerweise jede der Kreisöffnungen einen jeweiligen zentralen Pluspol einer Akkuzelle der Mehrzahl von Akkuzellen ringförmig umgeben. Vielmehr kann beispielsweise "hinter" jeder zweiten Kreisöffnung ein Minuspol einer Akkuzelle angeordnet sein. Bei antiparallelen Anordnung der Akkuzellen im Akkuzellenträger kann auch auf beiden Seiten der Akkuzellen eine Dichtmatte vorgesehen sein, so dass im Ergebnis jeder der zentralen Pluspole von einem erfindungsgemäß angeordneten Dichtelement profitiert.

In einer weiteren bevorzugten Ausgestaltung liegt ein überwiegender Flächenanteil der Dichtmatte in einer gemeinsamen Ebene mit der Mehrzahl von zentralen Pluspolen.

In einer besonders bevorzugten Ausgestaltung ist in jeder Zylinderkammer genau eine zylindrische Akkuzelle, vorzugsweise des Typs 21700, aufgenommen Es hat sich als vorteilhaft herausgestellt, wenn eine jede der zylindrischen Akkuzellen jeweils unmittelbar (abgesehen von etwaigen Lufteinschlüssen) von der inneren Mantelfläche der Zylinderkammer umgeben ist. So ist insbesondere vorgesehen, dass zwischen der zylindrischen Akkuzelle und der inneren Mantelfläche keine Elastomerteile oder dergleichen vorhanden sind.

Weitere Vorteile ergeben sich aus der folgenden Figurenbeschreibung. In den Figuren ist ein besonders bevorzugtes Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert. Es zeigt:
- Figur 1: ein erstes Ausführungsbeispiel eines Akkupacks in Schnittdarstellung; und
- Figur 2: das Akkupack der Figur 1 in perspektivischer Explosionsdarstellung.

### Ausführungsbeispiel:

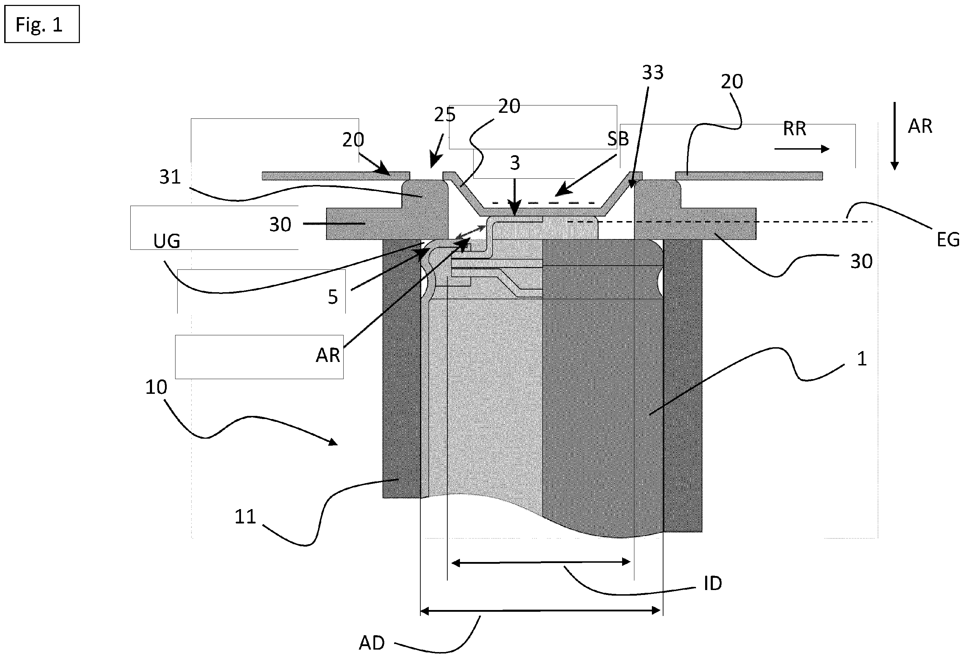

Ein erstes bevorzugtes Ausführungsbeispiel eines Akkupacks 100 in Schnittdarstellung ist in Figur 1 dargestellt. Das Akkupack 100 umfasst einen Akkuzellenträger 10 und eine in axialer Richtung AR in den Akkuzellenträger 10 eingeschobene zylindrische Akkuzelle 1.

Die Akkuzelle 1 weist einen zentralen Pluspol 3 auf, der mittels eines Zellverbinders 20 elektrisch kontaktiert ist. Der Zellverbinder 20 ist metallisch und in einem Schweißbereich SB auf den zentralen Pluspol 3 aufgeschweißt. Das Akkupack 100 umfasst zudem ein Dichtelement 30, das die Akkuzelle 1 gegen Feuchtigkeit oder Schmutz (= Staub) schützt.

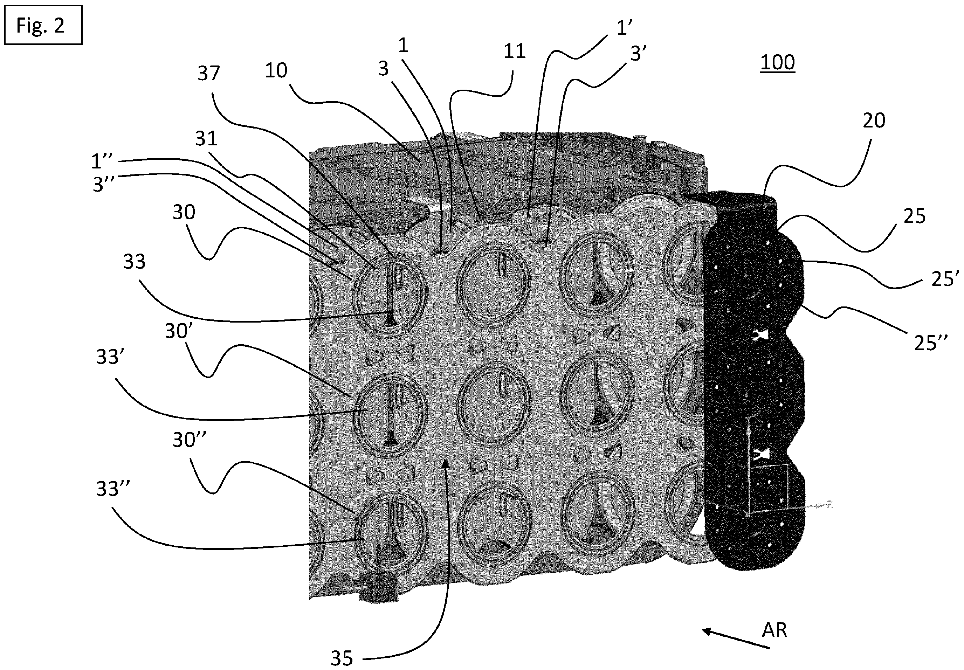

Das Dichtelement 30 umgibt den zentralen Pluspol 3 ringförmig (vgl. Figur 2 bzgl. der ringförmigen Ausgestaltung). Das Dichtelement 30 ist allseitig von dem zentralen Pluspol 3 beabstandet.

Mit anderen Worten steht das Dichtelement 30 nicht unmittelbar in Kontakt mit dem zentralen Pluspol 3. Daher konnte eine optimale Zellkontaktierung, hier beispielhaft mittels Laserschweißverfahren im Schweißbereich SB, ermöglicht werden. Der Innendurchmesser ID des Dichtelements 30 ist kleiner als der Außendurchmesser AD der Akkuzelle 1.

Im Zellverbinder 20 ist eine durch das Dichtelement 30 abgedeckte Ausblasöffnung 25 ausgebildet, wobei das Dichtelement 30 und die Ausblasöffnung 25 ein Überdruckventil definieren. Das Dichtelement 30 weist eine in axialer Richtung AR abragende Krempe 31 auf, welche die Ausblasöffnung 25 verschließt. Die Krempe 31 kann bei Überschreitung eines Mindestdrucks durch ein aus der Akkuzelle entweichendes Gas ausgelenkt werden, insbesondere in radialer Richtung RR nach außen. Dafür besteht das Dichtelement 30 aus einem Elastomer, das eine höhere Elastizität als der Zellverbinder 20 aufweist.

Das Dichtelement 30 überragt den zentralen Pluspol in axialer Richtung AR. Die vorzugsweise auch ohne Berücksichtigung der axialer Richtung AR abragende Krempe 31. Das Dichtelement 30 und der zentrale Pluspol 3 liegen in einer gemeinsamen Ebene EG.

Der Akkuzellenträger 10 weist ebenfalls einen die Akkuzelle 1 ringförmig umgebenden Trägersteg 11 auf. Wie der Fig. 1 entnommen werden kann, ist das Dichtelement 30 in axialer Richtung AR auf dem Trägersteg 11 abgestützt. Die Akkuzelle 1 weist weiterhin einen Zellbecher 5 auf, wobei das Dichtelement 30 in axialer Richtung AR auch auf dem Zellbecher 5 abgestützt ist. Das Dichtelement 30 deckt einen Übergang UG zwischen Trägersteg 11 und Zellbecher 5 ab. Ein Minuspol der Akkuzelle 1 wird durch den Zellbecher 5 der Akkuzelle 1 bereitgestellt. Ein Abstandsraum AR zwischen dem Dichtelement 30 und dem zentralen Pluspol 3 ist frei von einer Vergussmasse oder dergleichen.

Fig. 2 zeigt das Akkupack der Fig. 1 in perspektivischer Explosionsdarstellung, d.h. aus Darstellungsgründen ist der Zellverbinder 30 noch nicht verschweißt. Das Akkupack 100 weist eine Mehrzahl von Akkuzellen 1, 1', 1" auf.

Zunächst ist gut zu erkennen, dass im Zellverbinder 20 mehrere Ausblasöffnungen 25, 25', 25" ausgebildet sind, wobei jede der Ausblasöffnungen 25, 25', 25" durch das Dichtelement 30 abgedeckt ist. Im vorliegend dargestellten Ausführungsbeispiel sind pro Akkuzelle acht Ausblasöffnungen in ringförmiger Anordnung vorgesehen.

Weiterhin weist das Akkupack 100 eine Mehrzahl von Dichtelementen 30, 30', 30" auf, wobei die Mehrzahl von Dichtelementen 30, 30', 30" durch das Bereitstellen einer Mehrzahl von Kreisöffnungen 33, 33', 33" in einer Dichtmatte 35 realisiert sind. Jede der Kreisöffnungen 33, 33', 33" umgibt einen jeweiligen zentralen Pluspol 3, 3', 3" einer Akkuzelle der Mehrzahl von Akkuzellen 1, 1', 1" ringförmig und ist allseitig beabstandet. Ein überwiegender Flächenanteil der Dichtmatte 35 liegt in einer gemeinsamen Ebene EG mit der Mehrzahl von zentralen Pluspolen Pluspol 3, 3', 3" (vgl. Figur 1, exemplarisch Pluspol 3). Gut zu erkennen ist eine ringförmige Prägung 37, die ein Auslenken des Dichtelement 30 im Zuge eines Gasüberdrucks erleichtert.

### Bezugszeichenliste

- 1: Akkuzelle
- 3: zentraler Pluspol
- 5: Zellbecher
- 10: Akkuzellenträger
- 11: Trägersteg
- 20: Zellverbinder
- 25, 25' 25": Ausblasöffnung
- 30: Dichtelement
- 31: Krempe
- 33 33' 33": Kreisöffnungen
- 35: Dichtmatte
- 100: Akkupack

- AD: Außendurchmesser
- AR: axiale Richtung
- EG: gemeinsame Ebene
- ID: Innendurchmesser
- RR: radiale Richtung
- SB: Schweißbereich
- UG: Übergang

## Patentansprüche

1. Akkupack (100) mit einem Akkuzellenträger (10) und einer in axialer Richtung (AR) in den Akkuzellenträger (10) eingeschobenen zylindrischen Akkuzelle (1), wobei die Akkuzelle (1) einen zentralen Pluspol (3) aufweist, der mittels eines Zellverbinders (20) elektrisch kontaktiert ist, und wobei der Akkupack (100) ein Dichtelement (30) aufweist um die Akkuzelle (1) gegen Feuchtigkeit zu schützen,
**dadurch gekennzeichnet, dass** das Dichtelement (30) den zentralen Pluspol (3) ringförmig umgibt und vorzugsweise allseitig von diesem beabstandet ist.

2. Akkupack (100) nach Anspruch 1,
**dadurch gekennzeichnet, dass** im Zellverbinder (20) eine durch das Dichtelement (30) abgedeckte Ausblasöffnung (25) ausgebildet ist, wobei das Dichtelement (30) und die Ausblasöffnung (25) ein Überdruckventil definieren.

3. Akkupack (100) nach Anspruch 2,
**dadurch gekennzeichnet, dass** das Dichtelement (30) eine in axialer Richtung (AR) abragende Krempe (31) aufweist, welche die Ausblasöffnung (25) verschließt oder umschließt.

4. Akkupack (100) nach Anspruch 2 oder 3,
**dadurch gekennzeichnet, dass** im Zellverbinder (20) mehrere Ausblasöffnungen (25, 25', 25") ausgebildet sind, wobei jede der Ausblasöffnungen (25, 25', 25") durch das Dichtelement (30) abdeckt ist.

5. Akkupack (100) nach einem der vorangehenden Ansprüche,
**dadurch gekennzeichnet, dass** ein Innendurchmesser (ID) des Dichtelements (30) kleiner ist als ein Außendurchmesser (AD) der Akkuzelle (1).

6. Akkupack (100) nach einem der vorangehenden Ansprüche,
**dadurch gekennzeichnet, dass** das Dichtelement (30) den zentralen Pluspol in axialer Richtung (AR) überragt.

7. Akkupack (100) nach einem der vorangehenden Ansprüche,
**dadurch gekennzeichnet, dass** der Akkuzellenträger (10) einen die Akkuzelle (1) ringförmig umgebenen Trägersteg (11) aufweist, wobei das Dichtelement (30) in axialer Richtung (AR) auf dem Trägersteg (11) abgestützt ist.

8. Akkupack (100) nach einem der vorangehenden Ansprüche,
**dadurch gekennzeichnet, dass** Akkuzelle (1) einen Zellbecher (5) aufweist, wobei das Dichtelement (30) in axialer Richtung (AR) auf dem Zellbecher (5) abgestützt ist.

9. Akkupack (100) nach Anspruch 7 und 8,
**dadurch gekennzeichnet, dass** das Dichtelement (30) einen Übergang (UG) zwischen Trägersteg (11) und Zellbecher (5) abdeckt.

10. Akkupack (100) nach Anspruch 8 oder 9,
**dadurch gekennzeichnet, dass** ein Minuspol der Akkuzelle (1) durch den Zellbecher (5) der Akkuzelle (1) bereitgestellt ist.

11. Akkupack (100) nach einem der vorangehenden Ansprüche,
**dadurch gekennzeichnet, dass** ein Abstandsraum (AR) zwischen dem Dichtelement (30) und dem zentralen Pluspol (3) frei von einer Vergussmasse ist.

12. Akkupack (100) nach einem der vorangehenden Ansprüche,
**dadurch gekennzeichnet, dass** der Zellverbinder (20) metallisch ist und in einem Schweißbereich (SB) auf den zentralen Pluspol (3) aufgeschweißt ist.

13. Akkupack (100) nach einem der vorangehenden Ansprüche,
**dadurch gekennzeichnet, dass** das Dichtelement (30) aus einem Elastomer, insbesondere einem thermoplastischen Elastomer besteht.

14. Akkupack (100) nach einem der vorangehenden Ansprüche,
**dadurch gekennzeichnet, dass** das Akkupack (100) eine Mehrzahl von Akkuzellen (1, 1', 1") und eine Mehrzahl von Dichtelementen (30, 30', 30") aufweist, wobei die Mehrzahl von Dichtelementen (30, 30', 30") durch das Bereitstellen einer Mehrzahl von Kreisöffnungen (33, 33', 33") in einer Dichtmatte (35) realisiert sind, wobei vorzugsweise jeder, zumindest aber ein Teil der Kreisöffnungen (33, 33', 33") einen jeweiligen zentralen Pluspol (3, 3', 3") einer Akkuzelle der Mehrzahl von Akkuzellen (1, 1', 1") ringförmig und allseitig beabstandet umgibt.

15. Akkupack (100) nach Anspruch 13,
**dadurch gekennzeichnet, dass** ein überwiegender Flächenanteil der Dichtmatte (35) in einer gemeinsamen Ebene (EG) mit der Mehrzahl von zentralen Pluspolen (3, 3', 3") liegt.
